Europäisches Patentamt

European Patent Office

Office européen des brevets

(11) Veröffentlichungsnummer: **0 564 811 A2**

## (12) EUROPÄISCHE PATENTANMELDUNG

(21) Anmeldenummer: **93103227.0**

(22) Anmeldetag: **01.03.93**

(51) Int. Cl.⁵: **B60Q 7/00**

(30) Priorität: **06.04.92 DE 4211948**

(43) Veröffentlichungstag der Anmeldung:
**13.10.93 Patentblatt 93/41**

(84) Benannte Vertragsstaaten:
**AT BE CH DE DK ES FR GB IT LI LU NL SE**

(71) Anmelder: **Adolf Nissen Elektrobau GmbH + Co KG**
**Friedrichstädter Chaussee 4**
**D-25832 Tönning(DE)**

(72) Erfinder: **Peters, Okke, Dipl.-Ing.**
**Berghof**
**W-2251 Tetenbüll(DE)**

(74) Vertreter: **Niedmers, Ole, Dipl.-Phys.**
**Patentanwälte**
**Niedmers & Schöning**
**Jessenstrasse 4**
**D-22767 Hamburg (DE)**

(54) **Blitzleuchteneinrichtung.**

㉟ Es wird eine Blitzleuchteneinrichtung (10) zum schnellen, provisorischen Absichern von Gefahrenstellen sowie Baustellen und dergleichen im Straßenverkehrsbereich vorgeschlagen, umfassend ein Leuchtengehäuse (11) mit darin angeordneter Lampe (12) einem Fußelement (15) zum Befestigen des Leuchtengehäuses (11) an dessen erster Seite (16) und einem an der zweiten Seite (17) des Fußelementes (15) befestigten hohlen, stabförmigen Gehäuse (18) zur Aufnahme einer Mehrzahl von der Spannungsversorgung dienenden Batterien (19), wobei das stabförmige Gehäuse (18) in ein auf einem Untergrund (20) positionierbares Absperrelement (21) im wesentlichen vertikal einsteckbar ist. Das stabförmige Gehäuse (18) ist mit dem Fußelement (15) über eine Renkverbindung (22) miteinander verbunden.

Fig. 2

Fig. 3

EP 0 564 811 A2

Die Erfindung betrifft eine Blitzleuchteneinrichtung zum schnellen, provisorischen Absichern von Gefahrenstellen sowie Baustellen und dergleichen im Straßenverkehrsbereich, umfassend ein Leuchtengehäuse mit darin angeordneter Lampe und wenigstens einer das Leuchtengehäuse lichtaustrittsseitig abschließende Linse, einem Fußelement zum Befestigen des Leuchtengehäuses an dessen erster Seite und einem an der zweiten Seite des Fußelements befestigten hohlen, stabförmigen Gehäuse zur Aufnahme einer Mehrzahl von der Spannungsversorgung dienenden Batterien, wobei das stabförmige Gehäuse in ein auf einem Untergrund positionierbares Absperrelement im wesentliche vertikal einsteckbar ist.

Blitzleuchtungseinrichtungen dieser Art sind seit langem bekannt und werden zum schnellen Absichern von Unfallbereichen oder sonstigen Gefahrenbereichen im Straßenverkehrsbereich eingesetzt, um zumindest provisorisch in ausreichendem Maße den Straßenverkehr auf die Gefahrenquelle aufmerksam zu machen. Blitzleuchteneinrichtungen dieser Art werden in der Regel, da sie über eine eigene netzunabhängige Spannungsversorgung verfügen, bei Polizeifahrzeugen, ggf. bei sonstigen Baufahrzeugen, im Transport bzw. Kofferraum mitgeführt und sind unmittelbar am Ort der Gefahrenquelle durch entsprechendes Einschalten sofort funktionsbereit, wobei sie dann nach Inbetriebsetzen ein blitzendes Lichtsignal aussenden. Infolge des Aufbaus, d.h. des langgestreckten stabförmigen Gehäuses sind diese Blitzleuchteneinrichtungen auch leicht im Kofferraum oder dergleichen verstaubar und haben sich als im Einsatz äußerst praktisch erwiesen, da sie in die in der Regel von Polizeifahrzeugen immer mitgeführten pyramidenförmig ausgebildeten Sicherungshütchen von oben lediglich hineingesteckt zu werden brauchen und somit keiner besonderen kompliziert aufzubauende Standeinrichtung bedürfen.

Es hat sich jedoch bei diesen bekannten und an sich durchaus funktionsfäähigen und auch ansonsten funktionalen Blitzleuchteneinrichtungen gezeigt, daß diese bisweilen bei längerem Nichtgebrauch Funktionsstörungen zeigen, die insbesondere davon herrühren, daß der verwendete Batteriesatz nicht in vollem Umfang zu jeder Zeit funktionsfähig ist, was im wesentlichen von Kontaktschwierigkeiten der stabförmig aufgereihten Batterien herrührt, wobei die verwendeten einzelnen Batterien selbst wiederum herstellungs-, lagerungs- und gebrauchsbedingte Störungen zeigen. Ein schnelles Wechseln der Batterien oder auch eine Überprüfung der Batterien ist bei der bekannten Blitzleuchteneinrichtung nur dadurch möglich, daß ein flanschartiger Kragen, der am offenen Ende des stabförmigen Gehäuses angeordnet ist, von seiner Verbindung mit dem Fußelement befreit werden muß, was in der Regel durch Lösen einer bestimmten Anzahl von Schraubverbindungen, ggf. von entsprechenden Flügelnmuttern möglich ist. Insbesondere dann, wenn eine spontan aufgetretene Gefahrenquelle gesichert werden muß, ist ein vorherigen Demontieren des stabförmigen Gehäuses vom Fußelement von sehr großem Nachteil, da dieses in der Regel viel zu lange dauern würde. Ein weiterer wesentlicher Nachteil der bekannten Blitzleuchteneinrichtung besteht darin, daß die bisherige Verbindung über ein mit dem stabförmigen Gehäuse verbundenes Flanschteil sehr aufwendig herzustellen ist, da das Flanschteil an dem verhältnismäßig dünnwandig ausgebildeten stabförmigen Gehäuseteil in seinem Öffnungsbereich befestigt werden muß, was beispielsweise bisher mittel Lötung und/oder Schweißung erfolgt.

Es ist Aufgabe der vorliegenden Erfindung, eine Blitzleuchteneinrichtung der eingangs genannten Art zu schaffen, die eine schnelle Entfernung des stabförmigen Gehäuses vom Fußelement ermöglicht, so daß Batterien überprüft und/oder ggf. ausgetauscht werden können, wobei die Blitzleuchteneinrichtung sehr viel einfacher als die bekannte Blitzleuchteneinrichtung herstellbar sein soll und somit auch kostengünstiger als die bekannte Blitzleuchteneinrichtung bereitstellbar sein soll.

Gelöst wird die Aufgabe gemäß der Erfindung dadurch, daß das stabförmige Gehäuse mit dem Fußelement über eine Renkverbindung miteinander verbunden ist.

Die erfindungsgemäß vorgeschlagene Lösung hat den erheblichen Vorteil, daß, anders als bisher bei der bekannten Blitzleuchteneinrichtung, kein tellerförmiges Flanschteil am offenen Ende des stabförmigen Gehäuses vorgesehen zu werden braucht, so daß komplizierte und sehr kostenträchtige Herstellungsschritte entfallen. Auch kann das stabförmige Gehäuse prinzipiell aus einem als Halbzeug bereitstellbaren Rohr einfach in der gewünschten Länge abgeschnitten werden, so daß lediglich das geschlossene Ende des stabförmigen Rohres mit einem geeignet zu wählenden Verschluß, der auch als ein Kontaktwiderlager für die darin aufgenommenen Batterien dient, vorgesehen zu werden braucht.

Der wesentliche Vorteil der vorgeschlagenen Blitzleuchteneinrichtung besteht aber auch darin, daß die Renkverbindung zwischen dem Fußelement und dem stabförmigen Gehäuse ein fremdwerkzeugfreies Lösen und Verbinden in extrem kurzer Zeit ermöglicht, so daß, anders als bisher, keine Schrauben, Muttern oder sonstige Verbindungsmittel, ggf. noch mit Werkzeugen, entfernt zu werden brauchen.

Bei einer vorteilhaften Ausgestaltung weist das Fußelement an seiner zum stabförmigen Gehäuse gerichteten Seite einen Vorsprung zum im wesentlichen teilweisen Eintritt in den Hohlraum des stabförmigen Gehäuses auf, wodurch gewissermaßen eine Zentrierung und axialen und radialen Kräften standhaltende Fixierung des stabförmigen Gehäuses am Fußelement möglich ist.

2

EP 0 564 811 A2

Bei einer weiteren vorteilhaften Ausgestaltung der Blitzleuchtungseinrichtung durchquert ein Verriegelungsstift der Renkverbindung den Vorsprung im wesentlichen rechtwinklig zur Vorsprungsachse, wodurch erreicht wird, daß die an sich auf beliebige Weise ausbildbare Renkverbindung verriegelungsstiftseitig eine sehr einfache, praktische und sehr funktionelle Lösung erfährt, da keine weitere Halterung für den Verriegelungsstift nötig ist.

Um sicherzustellen, daß die Batterien, die, wie schon erwähnt, reihenartig hintereinander angeordnet sind, einen nötigen axialen Preßdruck erfahren, um einen guten Kontakt untereinander sicherstellen zu können, stützt sich bei einer anderen vorteilhaften Ausgestaltung der Blitzleuchtungseinrichtung eine Spiralfeder, die sich als erster Kontaktpol im über die Renkverbindung verbundenem Zustand des stabförmigen Gehäuses und des Fußelementes auf der Batterie mit ihrem einen Ende abstützt, mit ihrem anderen Ende am Verriegelungsstift ab. Somit erfüllt die Spiralfeder eine Doppelfunktion, d.h. sie dient einerseits der sicheren Kontaktgebung und andererseits sichert sie für den Arretierzustand der Renkverbindung eine ausreichend hohe axiale Kraft zwischen dem Verriegelungsstift der Renkverbindung und dem winkelförmig ausgebildeten Schlitz der Renkverbindung, die als anderes Teil der Renkverbindung auf dem stabförmigen Gehäuse im Bereich seiner Öffnung für den Eintritt der Batterien ausgebildet ist.

Vorteilhaft, weil vereinfachend und kostensparend für die Blitzleuchtungseinrichtung, ist es, daß der Verriegelungsstift als zweiter Kontaktpol im über die Renkverbindung verbundenen Zustand des Fußelementes und des stabförmigen Gehäuses dient und dabei mit diesem eine elektrische Verbindung herstellt. Zusätzliche Kontaktelemente, die einerseits Betriebsstörungsquellen darstellen und andererseits die Herstellung der Blitzleuchtungseinrichtung aufwendiger und somit verteuernd gestalten, sind somit entbehrlich.

Grundsätzlich kann das stabförmige Gehäuse aus beliebigem geeigneten Werkstoff bestehen, beispielsweise aus Kunststoff, um dieses nicht korrosionsanfällig zu machen. Um eine Kontaktgebung zumindest aber im Bereich der Renkverbindung im vorbeschriebenen Sinne möglich zu machen, müßte wenigstens ein winkelförmig ausgebildetes gehäuseseitiges Renkverbindungsteil wenigstens teilweise metallisch ausgebildet sein, um im vorbeschriebenen Sinne eine Kontaktgebung zu ermöglichen. Um aber derartige aufwendige weil kostenträchtige Ausgestaltungen zu vermeiden, ist es vorteilhaft, das stabförmige Gehäuse im wesentlichen aus Metall auszubilden, so daß keine weiteren Kontaktgebungsmaßnahmen im gehäuseseitigen Teil der Renkverbindung nötig sind.

Genau wie bisher bei der bekannten Blitzleuchteneinrichtung das stabförmige Gehäuse über einen damit verbundenen Befestigungsflansch am Fußelement über Befestigungsmittel verbunden war, die nur sehr aufwendig zu lösen bzw. zu befestigen sind, war bisher das Lampengehäuse, das auf der ersten Seite des Fußelements befestigt wird, mit einem ggf. integral mit dem übrigen Gehäuseteil ausgebildeten Flansch versehen und wurde über diesen Flansch ebenfalls mit Schraubmitteln oder sonstigen geeigneten Befestigungsmitteln an der ersten Seite des Fußelementes befestigt. Ein Lösen zu Wartungszwecken und ggf. zum Austausch der Linse, der Lampe oder sonstiger elektrischer bzw. elektronischer Bauteile oder einer vollständigen Entfernung des Lampengehäuses mit daran befestigten Linsen war bisher nur auf aufwendige Weise ebenso wie die vorher beschriebene Entfernung des stabförmigen Gehäuses vom Fußelement möglich. Aus diesem Grunde ist es vorteilhaft, die Blitzleuchtungseinrichtung derart auszubilden, daß das Fußelement an seiner zum stabförmigen Gehäuse entgegengesetzten Seite als Teil einer zweiten Renkverbindung ausgebildet, in die das zu seiner Aufnahme entsprechend ausgebildete Teil des Leuchtengehäuses einsteckbar und zum sicheren Halten verdrehbar ist und einen Flanschkragen aufweist, wobei das Teil durch einen Drehansatz mit im wesentlichen kreisförmigem Querschnitt und durch einen auf dem Drehansatz angeordneten im wesentlichen quarderförmigen Verriegelungskörper gebildet wird, dessen Breite im wesentlichen dem Durchmesser des Drehansatzes entspricht, während seine Länge größer als seine Breite ist. Damit wird vorteilhafterweise erreicht, daß das mit dem Fußelement verbundene Leuchtengehäuse durch eine einfache Dreh- und Längsbewegung abgezogen werden kann, so daß beispielsweise die Lampe auf einfache Weise ausgetauscht werden kann, ohne daß dazu Werkzeuge benötigt werden. Darüber hinaus gestattet das derart ausgebildete Fußelement auch ein problemloses Lösen des damit verbundenen Leuchtengehäuses, wenn beispielsweise Wasser, Schmutz oder Eis in den Verbindungsbereich zwischen Leuchtengehäuse und dem Fußelement eingedrungen ist, da die dadurch bewirkte Reibung zwischen Leuchtengehäuse und Fußelement aufgrund der gewählten Konstruktion keinen Einfluß auf die Bewegbarkeit des Leuchtengehäuses relativ zum Fußelement zum Verriegeln und Entriegeln hat. Die quarderförmige Kontur des Verriegelungskörpers hat bei einfacher Herstellbarkeit den Vorteil in Verbindung mit dem Drehansatz, daß das auf das Fußelement aufgesetzte Leuchtengehäuse in einer stabilen Stellung gehalten wird.

Auch weist vorteilhafterweise das Fußelement an seiner von der ersten Renkverbindung wegweisenden Seite eine Halterungsöffnung zum Einbringen einer Lampenhalterung auf, so daß bei einem Lampenaustausch lediglich die Renkverbindung zwischen Fußelement und Leuchtengehäuse gelöst zu werden braucht und das Leuchtengehäuse abgezogen werden muß. Die Lampe selbst, die normalerweise über die Halterung in das Leuchtengehäuse hineinragt, steht dann zum Austausch der Lampe von allen Seiten zugänglich frei auf dem Fußelement. Darüber hinaus gestattet diese Art der Ausbildung auch noch einen schneller Wechsel der Lampenhalterung als solcher, wenn beispielsweise am gleichen Ort anstelle von Blinklicht für bestimmte Einsatzzwecke auch Dauerlicht gewünscht wird.

Um eine gute Zugänglichkeit für ein Organ zum Inbetriebsetzen der Blitzleuchtungseinrichtung zu schaffen, ist das Fußelement vorteilhafterweise an seinem Seitenbereich mit einem Schalter versehen, wobei das Betätigungselement des Schalters durch erhaben vom Seitenbereich vorstehende Stege wenigstens zweiseitig begrenzt wird. Diese Stege haben wiederum den Vorteil, daß dann, wenn unbeabsichtigerweise das Leuchtengehäuse auf einen Untergrund fällt, der Schalter sich nicht selbständig einschalten kann, da das Betätigungselement, das in der Regel eine Wipptaste ist, nicht in Funktion kommen kann, da die Stege weiter vom Fußelement herhaben wegstehen als die Höhe des Betätigungselements über dem Fußelement ist. Somit wird auch verhindert, daß sich die Blitzleuchtungseinrichtung selbsttäätig beispielsweise bei einer Lagerung im Kofferraum eines Kraftfahrzeugs einschaltet, wenn beispielsweise diese, wenn sie im Kofferraum und dergleichen nicht gesichert ist und sich im Kofferraum hin- und her bewegt.

Vorzugsweise weist das Fußelement auch eine von außen zugängliche Kontaktanordnung auf, die einer Fremdspannungsversorgung und/oder einer Ladespannungszuführung für die Batterien der Blitzleuchtungseinrichtung dient. Sollten tatsächlich einmal die Batterien der Blitzleuchtungseinrichtung aus nicht vorhersehbaren Gründen funktionsunfäähig sein, kann über eine Kabelverbindung mit dem Polizeifahrzeug oder einem sonstigen anderen Fahrzeug durch Anschluß an das Bordspannungsnetz des Fahrzeugs die Blitzleuchtungseinrichtung über diese Kontakteinrichtung mit einer Fremdspannung versorgt werden oder aber dann, wenn es sich bei den Batterien um wiederaufladbare Akkumulatoren handelt, kann über diese Kontaktanordnung eine Verbindung zu einer Ladespannungsquelle hergestellt werden.

Schließlich ist es von Vorteil, die Kontaktanordnung, die prinzipiell an jeder beliebigen geeigneten Stelle der Blitzleuchtungseinrichtung vorgesehen werden kann, im wesentliche parallel zum Flanschkragen im Verriegelungskörper anzuordnen, so daß die Kontaktanordnung unmittelbar auf der Lampenhalterung, die in der Regel von einer gedruckten Schaltung oder dergleichen gebildet wird, angebracht werden kann, wodurch eine einfache und kostengünstige Herstellbarkeit gewährleistet ist, da keine gesonderten Kabelverbindungen zur Lampenhalterung und dergleichen vorgesehen werden muß.

Die Erfindung wird nun unter Bezugnahme auf die nachfolgenden schematischen Zeichnungen anhand eines Ausführungsbeispieles eingehend beschrieben. Darin zeigen:

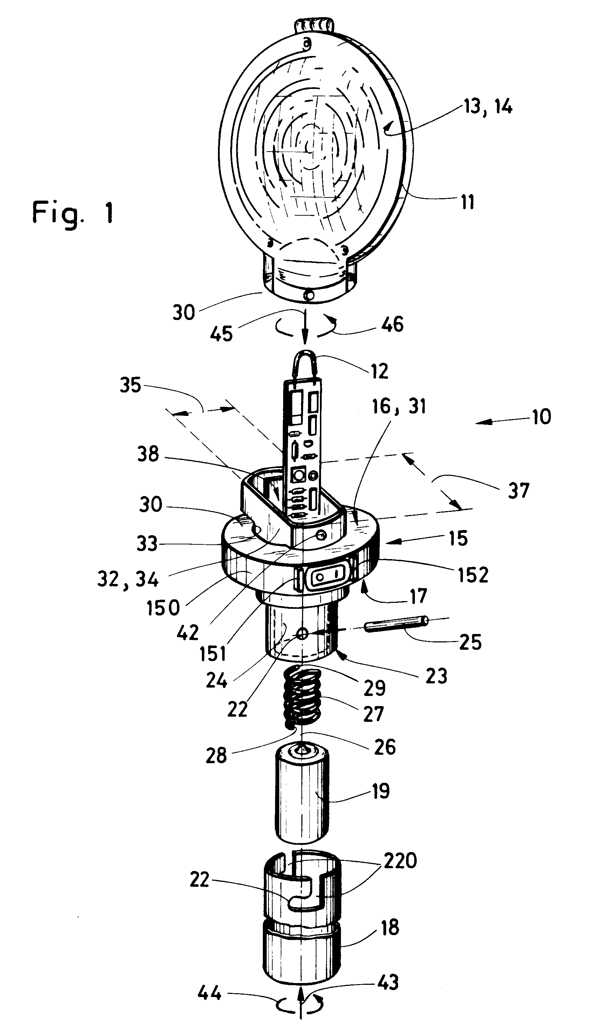

Fig. 1      in perspektivischer, auseinandergezogener Darstellung eine Blitzleuchtungseinrichtung,

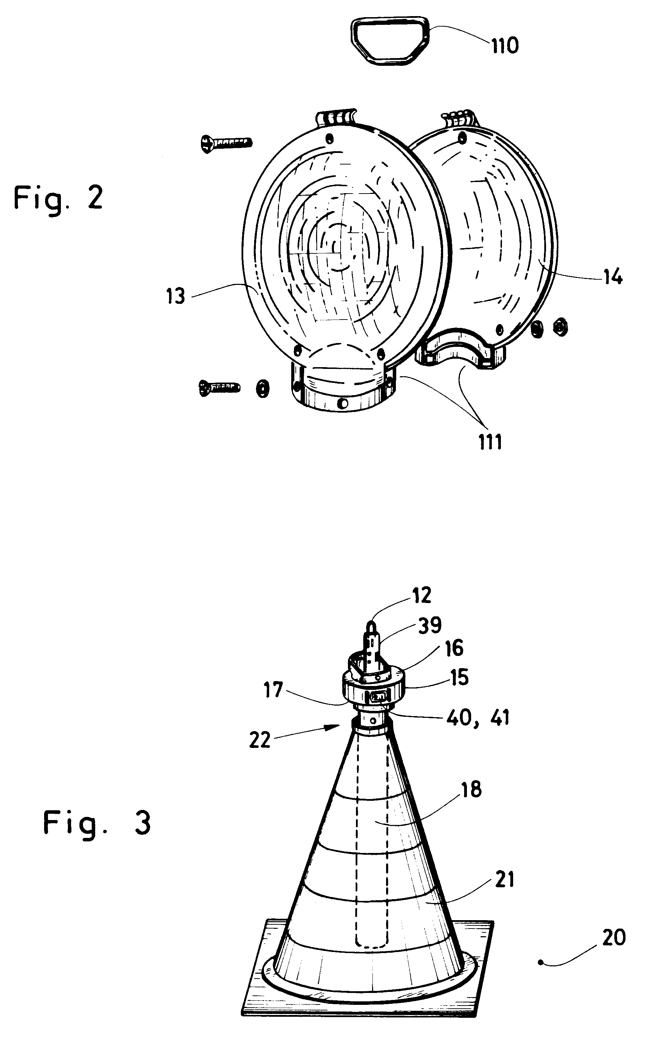

Fig. 2      in perspektivischer Darstellung ein zweigeteiltes Leuchtengehäuse der Blitzleuchtungseinrichtung in auseinandergezogener Darstellung und

Fig. 3      ein tüten- bzw. pyramidenförmiges Absperrelement, das auf einem Untergrund abgestellt ist, mit in eine Öffnung des Absperrelementes eingesteckter Blitzleuchtungseinrichtung unter Weglassung des Leuchtengehäuses.

Die Blitzleuchtungseinrichtung 10 besteht im wesentlichen aus einem Leuchtengehäuse 11, daß wenigstens eine darin aufgenommene, das Leuchtengehäuse 11 wenigstens einseitig abschließende Linse 13 aufweist. Das Leuchtengehäuse 11 kann aber auch zwei das Leuchtengehäuse 11 abschließende Linsen 13, 14 aufweisen. Darüber umfaßt die Blitzleuchteneinrichtung 10 ein Fußelement mit einer ersten und einer zweiten Seite 16, 17, wobei das Fußelement im wesentlichen bei der in den Figuren dargestellten Ausgestaltung ein im wesentlichen axial-symmetrisches Gebilde ist. Schließlich umfaßt die Blitzleuchtungseinrichtung 10 ein stabförmiges Gehäuse 18, in dem eine Mehrzahl von Batterien 19 reihenartig hineinander angeordnet sind, und zwar nach Art gewöhnlicher, bekannter Taschenlampenbatteriekörper.

Das Fußelement 15 weist an seiner zum stabförmigen Gehäuse 18 gerichteten zweiten Seite 17 einen im wesentlichen rohrförmig ausgebildeten Vorsprung 23 auf. Im Vorsprung 23 ist ein diesen im wesentlichen rechtwinklig zur Vorsprungsachse 26 angeordneter Verriegelungsstift 25 vorgesehen, der im in den Vorsprung 23 eingesetzten Zustand geringfügig über die Oberfläche des Vorsprungs 23 hinaussteht. Im Vorsprung 23 ist ein hier nicht gesondert dargestellter, koaxial zur Vorsprungsachse 26 angeordnetes Führungsröhrchen angeordnet, aus das eine Spiralfeder 27 mit ihrem ersten Ende 29 geschoben wird. Die Spiralfeder 27 wird somit im wesentlichen koaxial zur Vorsprungsachse 26 im Vorsprung 23 gehalten. Das zweite andere Ende 28 der Spiralfeder wirkt als erster Kontaktpol auf einen entsprechenden Pol der Batterie 19, wenn, was noch weiter unten im einzelnen beschrieben wird, das stabförmige Gehäuse 18 mit dem Fußelement 15 über eine Renkverbindung 22 miteinander verbunden wird, deren Teil der Verriegelungsstift 25 ist. Das zweite Teil der Renkverbindung 22 wird durch einen hier zweifach ausgebildeten Winkelschlitz 220 gebildet, der am öffnungsseitigem Ende des stabförmigen Gehäuses 18 vorgesehen ist. Der Verriegelungsstift 25, der auf hier nicht gesondert dargestellte Weise über eine Leitung mit der Lampenhalterung 39 verbunden ist, die elektronische Bauteile zur Erzeugung von entsprechenden Signalen zur Blitzsteuerung der Lampe 12 umfaßt, wirkt als zweiter Kontaktpol zur Verbindung mit dem anderen Kontakt des Batteriesatzes 19. Damit der Verriegelungsstift 25 als Kontaktpol dienen kann, ist das stabförmige Gehäuse 18 im wesentlichen aus leitendem Metall ausgebildet, wobei die im stabförmigen Gehäuse 18 zu unterst angeordnete Batterie mit ihrer entsprechenden Polseite auf geeignete Weise Kontakt zum Gehäuse 18 liefert. In über die Renkverbindung 22 verbundenem Zustand des Fußelementes 15 und des stabförmigen Gehäuses kann somit über den Verriegelungsstift 25 ein elektrischer Kontakt hergestellt und Spannung zur Lampenhalterung 39 zugeführt werden.

Es sei erwähnt, daß hier aus Vereinfachungsgründen der Begriff Batterie 19 sowohl für Monozellen als auch für wiederaufladbare Akkumulatoren gewählt worden ist.

Grundsätzlich sind sowohl Monozellen als auch wiederaufladbare Akkumulatoren als Batterien 19 in der Blitzleuchtungseinrichtung 10 verwendbar.

Zur Verbindung des stabförmigen Gehäuses 18 und des Fußelementes 15 wird das stabförmige Gehäuse zunächst in Richtung des Pfeiles 43 axial auf den Vorsprung 23 zugeführt, bis der Vorsprung 23 in den Hohlraum 24 des stabförmigen Gehäuses 18 eingetreten ist, und zwar soweit, bis der Verriegelungsstift 25 das untere Ende des axialen Teils des Winkelschlitzes 220 berührt hat. Nachfolgend wird entsprechend dem Pfeil 44 das stabförmige Gehäuse 18 gedreht, bis der Verriegelungsstift 25 seine Endstellung im in Umfangsrichtung ausgerichteten Teil des Winkelschlitzes 22 erreicht hat. Durch die durch die Spiralfeder 27 im zusammengedrückten Zustand ausgeübte Kraft in axialer Richtung wird die Renkverbindung 22 in ihrer arretierten Stellung sicher gehalten. Ein Lösen des stabförmigen Gehäuses 18 vom Fußelement 15 erfolgt auf gleiche Weise wie vorangehend beschrieben, jedoch in umgekehrter Reihenfolge, so daß Batterien 19 entnommen, ausgetauscht und dgl. werden können.

Das Fußelement 15 weist an seiner ersten Seite 16 ebenfalls eine Renkverbindung 30 auf. Das dortige Renkverbindungsteil 32 ist in ein entsprechend ausgebildetes Teil des Leuchtengehäuses 11 einsteckbar und zum sicheren Halten verdrehbar. Dazu weist das Fußelement einen Flanschkragen 31 und einen Drehansatz 33 auf, die Teil 32 des Fußelementes 15 sind. Das Teil 32 wird zudem durch einen im wesentlichen quarderförmigen Verriegelungskörper 34 gebildet, dessen Breite 35 im wesentlichen dem Durchmesser 36 des Drehansatzes entspricht. Die Länge 37 des quarderförmigen Verriegelungskörpers 34 ist größer als seine Breite 35. Das Leuchtengehäuse 11, das entsprechend dem vorbeschriebenen Renkverbindungsteil 32 in seiner Eintrittsöffnung 111 ausgebildet ist, wird zur Verbindung mit dem an der ersten Seite 16 des Fußelementes 15 ausgebildeten Renkverbindungsteils 32 dadurch verbunden, das es zunächst in Richtung des Pfeiles 45 axial soweit verschoben wird, das es auf dem Flanschkragen 31 zu liegen kommt und wird dann entsprechend der Richtung des Pfeiles 46 um die Achse des Gesamtsystems gedreht, und zwar in Richtung des Pfeiles 46. Ein Lösen des Lampengehäuses 11 vom Fußelement 15 erfolgt in gleicher Weise wie vorangehend beschrieben, jedoch in umgekehrter Schrittfolge.

Im Fußelement 15 ist im quarderförmigen Verriegelungskörper 34 eine Halterungsöffnung 38 vorgesehen, in die die Lampenhalterung 39, auf der, wie beschrieben, die elektronischen Bauelemente angeordnet sind, eingebracht werden kann. Die Halterungsöffnung 38 ist derart ausgestaltet, daß die Lampenhalterung 39, die durch ein schmale gedruckte Schaltung gebildet wird, geführt und geklemmt gehalten aufgenommen werden kann. Zusätzliche Befestigungsbauelemente sind nicht vorzusehen.

Das Fußelement 15 ist im Bereich des Verriegelungskörpers 34 mit einer Kontaktanordnung versehen, in die im wesentlichen parallel zum Flanschkragen 31 von außen ein Stecker einer externen Spannungs- und/oder Ladespannungszuführung hineingesteckt werden kann, um beispielsweise die Blitzleuchtungseinrichtung 10 mit einer externen Versorgungsspannung oder aber mit einer Ladespannung zu versorgen, falls als Batterien 19 wiederaufladbare Akkumulatoren verwendet werden. Schließlich weist die Blitzleuchtungseinrichtung 10 einen Schalter 40 zur Inbetriebnahme auf. Das eigentliche Betätigungsorgan 41 des Schalters 40 wird seitlich durch zwei gegenüberliegend angeordnete, vom Seitenbereich 150 des Fußelementes 15 im wesentlichen erhaben vorstehende Stege 151, 152 begrenzt. Die Stege 151, 152 sind so hoch, daß sie, bezogen auf den Seitenbereich 150 des Fußelementes 15, höher als das Betätigungselement 41 des Schalters 40 sind. Die Stege 151, 152 dienen einem unbeabsichtigen Inbetriebsetzen der Blitzleuchtungseinrichtung 10, falls diese unbeabsichtigterweise auf einen Untergrund 20 oder dergleichen fällt oder aber ungesichert im Kofferraum eines Fahrzeugs während des Fahrens hin- und her verrutscht und gegen Gegenstände bzw. Einrichtungen stößt, was normalerweise dann ein an sich unbeabsichtigtes Betätigen des Betätigungselementes 41 zur Folge hätte.

| Bezugszeichenliste | | | |
|---|---|---|---|
| 10 | Blitzleuchteneinrichtung | 35 | Breite |
| 11 | Leuchtengehäuse | 36 | Durchmesser |
| 110 | Handgriff | 37 | Länge |
| 111 | Eingriffsöffnung | 38 | Halterungsöffnung |
| 12 | Lampe | 39 | Lampenehalterung |
| 13 | Linse | 40 | Schalter |
| 14 | Linse | 41 | Betätigungselement |
| 15 | Fußelement | 42 | Kontaktanordnung |
| 150 | Seitenbereich | 43 | Pfeil |
| 151 | Steg | 44 | Pfeil |
| 152 | Steg | 45 | Pfeil |
| 16 | erste Seite (Fußelement) | 46 | Pfeil |
| 17 | zweite Seite (Fußelement) | | |
| 18 | stabförmiges Gehäuse | | |
| 19 | Batterie | | |
| 20 | Untergrund | | |
| 21 | Absperrelement | | |
| 22 | Renkverbindung (erste) | | |
| 220 | Winkelschlitz | | |
| 23 | Vorsprung | | |
| 24 | Hohlraum | | |
| 25 | Verriegelungsstift | | |
| 26 | Vorsprungsachse | | |
| 27 | Spiralfeder | | |
| 28 | erstes Ende (Spiralfeder) | | |
| 29 | zweites Ende (Spiralfeder) | | |
| 30 | Renkverbindung (zweite) | | |
| 31 | Flanschkragen | | |
| 32 | Renkverbindungsteil | | |
| 33 | Drehansatz | | |
| 34 | Verriegelungskörper | | |

**Patentansprüche**

1. Blitzleuchtungseinrichtung zum schnellen, provisorischen Absichern von Gefahrenstellen sowie Baustellen und dergleichen im Straßenverkehrsbereich, umfassend ein Leuchtengehäuse mit darin angeordneter Lampe und wenigstens einer das Leuchtengehäuse lichtaustrittsseitig abschließenden Linse, einem Fußelement zum Befestigen des Leuchtengehäuses an dessen erster Seite und einem an der zweiten Seite des Fußele ments befestigten hohlen, stabförmigen Gehäuse zur Aufnahme einer Mehrzahl von der Spannungsversorgung dienenden Batterien, wobei das stabförmige Gehäuse in ein auf einem Untergrund positionierbares Absperrelement im wesentlichen vertikal einsteckbar ist, dadurch gekennzeichnet, daß das stabförmige Gehäuse (18) mit dem Fußelement (15) über eine Renkverbindung (22) miteinander verbunden ist.

2. Blitzleuchtungseinrichtung nach Anspruch 1, dadurch gekennzeichnet, daß das Fußelement (15) an seiner zum stabförmigen Gehäuse (18) gerichteten Seite (17) einen Vorsprung (23) zum im wesentlichen teilweisen Eintritt in den Hohlraum (24) des stabförmigen Gehäuses (18) aufweist.

3. Blitzleuchtungseinrichtung nach Anspruch 2, dadurch gekennzeichnet, daß ein Verriegelungsstift (25) der Renkverbindung (22) den Vorsprung (23) im wesentlichen rechtwinklig zur Vorsprungachse (26) durchquert.

4. Blitzleuchtungseinrichtung nach Anspruch 3, dadurch gekennzeichnet, daß sich eine Spiralfeder (27), die sich als erster Kontaktpol in über die Renkverbindung (22) verbundenem Zustand des stabförmigen Gehäuses (18) und des Fußelementes (15) auf der Batterie (19) mit ihrem eine Ende (28) abstützt, mit ihrem anderen Ende (29) am Verriegelungsstift (25) abstützt.

5. Blitzleuchtungseinrichtung nach einem oder beiden der Ansprüche 3 oder, dadurch gekennzeichnet, daß der Verrriegelungsstift (25) als zweiter Kontaktpol in über die Renkverbindung (22) verbundenem Zustand des Fußelementes (15) und des stabförmigen Gehäuses (18) dient und mit diesem eine elektrische Verbindung herstellt.

6. Blitzleuchtungseinrichtung nach einem oder mehreren der Ansprüche 1 bis 5, dadurch gekennzeichnet, daß das stabförmige Gehäuse (18) im wesentlichen aus Metall ausgebildet ist.

7. Blitzleuchtungseinrichtung nach einem oder mehreren der Ansprüche 1 bis 6, dadurch gekennzeichnet, daß das Fußelement (15) an seiner zum stabförmigen Gehäuse (18) entgegengesetzten Seite (16) als Teil (32) einer zweiten Renkverbindung (30) ausgebildet ist, in die das zu seiner Aufnahme entsprechend ausgebildete Teil des Leuchtengehäuses (11) einsteckbar ist und zum sicheren Halten verdrehbar ist, sowie einen Flanschkragen (31) aufweist, wobei das Teil (32) durch einen Drehansatz (33) mit im wesentlichen kreisförmigem Querschnitt und durch einen auf dem Drehansatz (33) angeordneten, im wesentlichen quarderförmigen Verriegelungskörper (34) gebildet wird, dessen Breite (35) im wesentlichen dem Durchmesser (36) des Drehansatzes (33) entspricht, während seine Länge (37) größer als seine Breite (35) ist.

8. Blitzleuchtungseinrichtung nach Anspruch 7, dadurch gekennzeichnet, daß das Fußelement (15) an seiner von der ersten Renkverbindung (22) wegweisenden Seite (16) eine Halterungsöffnung (38) zum Einbringen einer Lampenhalterung (39) aufweist.

9. Blitzleuchtungseinrichtung nach einem oder mehreren der Ansprüche 1 bis 8, dadurch gekennzeichnet, daß das Fußelement (15) an seinem Seitenbereich (150) einen Schalter (40) zum Inbetriebsetzen der Blitzleuchtungseinrichtung (10) aufweist, wobei das Betätigungselement (41) des Schalters (40) durch erhaben vom Seitenbereich (150) vorstehende Stege (151, 152) wenigstens zwei seitig begrenzt wird.

10. Blitzleuchtungseinrichtung nach einem oder mehreren der Ansprüche 1 bis 9, dadurch gekennzeichnet, daß das Fußelement (15) eine von außen zugängliche Kontaktanordnung (42) aufweist, die einer Fremdspannungsversorgung und/oder einer Ladespannungszuführung für die Batterien (19) dient.

11. Blitzleuchtungseinrichtung nach Anspruch 10, dadurch gekennzeichnet, daß die Kontaktanordnung (42) im wesentlichen parallel zum Flanschkragen (31) im Verriegelungskörper (34) angeordnet ist.

Fig. 1

Fig. 2

110

13

14

111

12

39

16

15

17

40, 41

22

18

21

Fig. 3

20